# EUROPEAN PATENT SPECIFICATION

(11) **EP 2 986 874 B1**
(45) Date of publication and mention of the grant of the patent: **13.12.2017**
(21) Application number: 13792583.0
(22) Date of filing: 25.10.2013
(51) Int. Cl.: F16K 1/12, F16K 3/26, F16K 37/00, F16K 3/24

(54) **AXIAL VALVE WITH STATIONARY ELEMENT**
AXIALVENTIL MIT EINEM STATIONÄREN ELEMENT
SOUPAPE AXIALE COMPRENANT UN ÉLÉMENT FIXE

(30) Priority: 16.04.2013 WO PCT/DK2013/000028
(43) Date of publication of application: 24.02.2016
(73) Proprietor: Danfoss A/S, 6430 Nordborg (DK)
(72) Inventor: LARSEN, Sigurd, 20255 Hamburg (DE); HARCK, Kurt, DK-6400 Soenderborg (DK)
(74) Representative: Knoblauch, Andreas
(86) International application number: PCT/DK2013/000073
(87) International publication number: WO 2014/169916

(56) References cited:
- WO-A1-2012/045310
- WO-A2-2007/048942
- DE-U1- 20 311 032
- FR-A1- 2 871 212
- US-A- 3 485 264
- US-A- 3 654 950
- US-A1- 2003 196 698
- US-A1- 2010 187 462

## Description

### BACKGROUND OF THE INVENTION

### Technical Field

The present invention relates to a valve according to the preamble of claim 1 and to a method of assembling such a valve according to the preamble of claim 12.

This invention relates to axial valves, that is, valves with axially moving valve elements along a longitudinal extension of the valve, the longitudinal extension being along a prevailing flow direction of fluid through the valve. The invention relates more particularly to axial electronic valves in vapor compression systems such as refrigeration systems. The invention also relates to a method for assembling such a valve, to a stationary element for a valve and to a vapor compression system with such valve.

### Background Art

A valve according to the preamble of claim 1 is known from US 2010/0187462 A1.

US 2003/0196698 A1 describes a further axial flow control valve comprising a casing and an actuator. The actuator is arranged perpendicular to the main flow direction through the valve.

WO 2007/048942 describes a variable pressure drop and/or closing and sealing device with internal cartridge and mobile tube. A closing element is driven by an actuator which is arranged perpendicular to the main flow direction through the valve and a movement of the actuator is transferred to the closing element by means of a rotating disk.

WO 2012/045310 A1 describes a flow control valve comprising an actuator having a spindle threaded into an internal thread of a closing element.

DE 203 11 032 U1 describes an actuator for an actuating element of an orifice, a valve, a connecting means, dosing means or the like.

US 3 654 950 describes a further valve which is actuated by means of a lever which can rotate a shaft arranged perpendicular to a main flow direction through the valve.

US 3 485 264 A discloses a flow controlling valve having an actuator inside a casing.

FR 2 871 212 A1 describes a valve comprising a casing and an actuator, the actuator comprising an element being stationary in relation to the casing of the valve and a closing element being placed inside the casing and being moveable in relation to the casing of the valve.

Axial valves are well known for flow control. Axial valves have a passageway that is substantially parallel to the fluid flow path. Axial valves typically comprise an actuator, and the actuator can be a stepper motor with a stator and a rotor and a spindle.

Known axial valves are commonly rather complex. The rotational movement of the rotor is transformed to a linear moving spindle, the spindle in one end has a head. When the spindle is moved in one direction the head acts with a valve seat to close the valve orifice for fluid passage, and when the spindle is moved in the opposite direction, the head is moved away from the valve seat to open for fluid passage through the orifice. The axial valve has many parts making the assembly complicated and requiring critical process control to reduce rejects. The many parts of the valve increase the risk of failure of parts of the valve due to productions failures or due to malfunction between the many parts during operation of the valve.

Furthermore, the forces acting from the flow of fluid, when the valve is operating, can be significant and may hamper movement of the movable parts. The flow-forces can thereby act as a barrier for reaching high capacities or high differential pressures between inlet and outlet of the valve.

### SUMMARY OF THE INVENTION

The object of the present invention is to make a simple, cost-effective axial electronic expansion valve or suction pressure regulation valve or other type of valve in a vapor compression cycle, with low complexity and few parts.

The object of the invention is obtained by a valve having the features of claim 1 and by a method for assembling a valve, said method having the features of claim 12.

A valve being provided with features mentioned has the advantage of functional parts of the valve being mutually aligned by means of a stationary element, different from the casing, and the center element and the movable parts of the actuator of the valve being supported by the stationary element, resulting in a reliable functioning of the valve, and in an easy assembly of the valve.

In an embodiment of the invention, the center element is a center tube placed parallel in relation to the longitudinal extension of the valve, the closing element being placed along the center tube, and said closing element at least partly extending along a sidewall of the center tube, when in the first position. The center element being a center tube provides a close abutment between the center tube and the closing element along sidewalls of the elements.

In another embodiment of the invention, the center element is a center bracket placed obliquely to the longitudinal extension of the valve, the closing element being placed in extension of the center bracket, and said closing element at least partly abutting a sidewall of the center bracket, when in the first position. The center element being a center bracket, where the closing element and the center bracket only is in abutment when the closing element is in the first, closed position, may reduce mutual friction between the elements.

According to one embodiment of the valve, the actuator comprises a stepper motor, and wherein the stepper motor constitutes part of the stationary element, and wherein a spindle of the stepper motor is movable along a rotational direction in relation to the stationary part, said spindle capable of moving the closing element between the first position and the second position.

A stepper motor is a reliable means of operating the closing element, and a spindle moving the closing element is a mechanically stable way of operating the closing element. The spindle being movable along a rotational direction is preferably provided when the spindle is not intended, at the same time, for being movable along a longitudinal direction of the valve.

According to another embodiment of the valve, the actuator comprises a stepper motor, and wherein the stepper motor constitutes part of the stationary element, and wherein a spindle of the stepper motor is movable along a longitudinal direction in relation to the stationary element, said spindle capable of moving the closing element between the first position and the second position.

A stepper motor is a reliable means of operating the closing element, and a spindle moving the closing element is a mechanically stable way of operating the closing element. The spindle being movable along a longitudinal direction is preferably provided when the spindle is not intended, at the same time, for being movable along a rotational direction of the valve.

According to a preferred embodiment of the valve, the stepper motor comprises an encapsulation of a stator and a rotor of the stepper motor, and wherein the encapsulation of the stator and rotor is supported by and is in a fixed position in relation to a frame of the stationary element, said encapsulation providing a hermetic enclosure of the stator and the rotor in relation to the fluid passing through the valve. The stator and the rotor being hermetically enclosed has the advantage that the flow of fluid such as a refrigerant, will not harm wires, magnets and other structural elements of the stator and the rotor.

The center element is preferably at least partly supported by a frame of the stationary element and is in a fixed position in relation to the frame of the stationary element, which provides a good structural integration between the center element and the frame, ensuring reliable function of the elements being stationary in relation to the casing.

The stationary element preferably comprises an intermediate part of the frame and a connecting part of the frame, said intermediate part of the frame and said connecting part of the frame being positioned displaced from each other along the longitudinal extension of the valve, and with the proviso that the center element is a center tube, wherein one end of the center tube is fixed to the connecting part of the frame, and a second end of the center tube is fixed to the intermediate part of the frame, so that the longitudinal extension of the center tube is aligned with a longitudinal extension of the stationary element. Such structure provides a good structural integration between the center tube and the frame, ensuring reliable function of the elements being stationary in relation to the casing.

According to an embodiment of the valve, a slider of the closing element is positioned along a sidewall of the center tube, and wherein the slider of the closing element is movably guided by the center tube, and wherein the slider of the closing element at least partly is supported by the center tube. Providing a slider along the sidewall of the center tube has the advantage of a good and reliable mutual interaction between the center tube and the slider. The center tube and the slider constitute some of the main functional parts for allowing and obstructing fluid flow through the embodiment of the valve.

One or more orifices are provided in the center element, positioned in a sidewall of the center tube, allowing fluid to pass through the center element through the sidewall of the center element, when the closing element is not in the first position. In the embodiment where the center element is a center tube, providing one or more orifices in the sidewall of the center tube has the advantage of an end of the center tube leading to the inside of the center tube and the one or more orifices providing passages between the inside and an outside of the center tube, the inside of the center tube and the outside of the center tube thereby constituting a high pressure zone and a low pressure zone of the fluid, respectively, or vice versa.

Preferably, the one or more orifices of the center tube are positioned in a first end of the center tube, allowing fluid to pass to or from the Inside of the center tube through the first end of the center tube by passing from an outside surface of the sidewall of the center tube to an inside of the center tube, or from inside the center tube to the outside surface of the sidewall of the center tube, when the closing element is not in the first position. The one or more orifices being provided in a first end of the center tube, and not in a central part of the center tube, has the advantage of freeing another end of the center tube for supporting the closing element such as a slider,

The slider of the closing element may be cup-shaped, wherein a longitudinal extension of the slider of the closing element extends along the longitudinal extension of the center tube, and wherein only a part of the longitudinal extension of the slider of the closing element extends along a sidewall of the center tube during displacement of the closing element between the first position and the second position, and vice versa, and wherein another part of the slider of the closing element Is supported by a spindle of the motor. The slider being cup-shaped provides a possibility of using the base of the cup for inserting the spindle. Sidewalls of the cup-shaped slider may extend along the center tube, and the base may be supported by the spindle of the motor.

Alternatively, the slider of the closing element may be cylindrical with a pointed tip, wherein a longitudinal extension of the slider of the closing element in extension of the center element, and wherein no part of the longitudinal extension of the slider of the closing element extends along a sidewall of the center element during displacement of the closing element between the first position and the second position, and vice versa, and wherein another part of the slider of the closing element is supported by a spindle of the motor. The slider being cylindrical provides a possibility of using the base of the cup for inserting the spindle. The pointed tip of the slider may extend towards the center element, and the base may be supported by the spindle of the motor.

In a preferred embodiment of a cup-shaped slider, a first end of the cup-shaped slider, in the first position of the closing element, is closing the one or more orifices, thereby not allowing fluid to pass the orifices, and in the second position of the closing element, is at least partly opening the one or more orifices, thus allowing fluid to pass the orifices, and where a second end of the slider, in both the first position and second position of the closing element, is supported by a spindle of the motor. Thereby, the sidewall of the cup-shaped slider is supported by the sidewall of the center tube during any position of the slider between the first position and the second position.

In one embodiment, the slider of the closing element extends along an inner surface of the sidewall of the center tube. This may have the advantage of the cup-shaped slider constituting a base both of the slider and of the center-tube at the same time.

Operation of the slider is preferably performed by a spindle of the motor being provided with a screw thread, and a base of the slider being provided with a screw thread, said screw thread of the spindle and said screw thread at the base of the slider being mutually engaged, and wherein a rotational movement of the spindle is transformed to also an axial movement of the slider of the closing element in relation to the center element.

In another embodiment, the slider of the closing element extends along an outer surface of the sidewall of the center tube. Assembly of the slider in relation to the center tube, and detection and control of operation of the slider is easier, when the slider extends along the outer circumference, and not the inner circumference, of the center tube.

Operation of the slider is preferably performed by a spindle of the motor being provided with a screw thread, and a base of the slider being provided with a screw thread, said screw thread of the spindle and said screw thread at the base of the slider being mutually engaged, and wherein a rotational movement of the spindle is transformed to also an axial movement of the slider of the closing element in relation to the center tube.

The slider may be constantly biased towards the first position by a biasing element, preferably a spring, with a biasing force, alternatively towards the second position by a biasing element, preferably a spring, with a biasing force, and wherein the biasing element is capable of constantly maintaining a mutual engagement, free of play, between the slider and tie spindle, thereby taking up any play between the internal thread of the base of the spindle and the external thread of the spindle. Thereby, hysteresis may be eliminated, or hysteresis may at least be significantly decreased, when operating the valve during start of movement of the slide towards the first position or toward the second position.

The screw thread at the base of the slider may be provided in a nut mounted in the base of the slider. According to this embodiment, the closing element comprises a nut mounted in the base of the slider, making it easier and more cost effective to manufacture the closing element with desired tolerance levels. For instance, the nut may simply be a standard nut provided with a screw thread. The nut may be made from a material such as an elastomer providing a low friction loss, and the screw thread engagement may act as a universal joint, compensating any forces acting on the parts as a result of possible play. As an alternative, the screw thread may be provided directly in a base of the slider.

The stationary part preferably comprises a frame, said frame having a connecting part for connecting with a connecting flange of the casing, an intermediate part with one or more orifices, a funnel-shaped part passing the spindle of the motor, and a frame part for supporting the motor of the actuator. Providing a frame has the advantage of maintaining operating part of the valve in mutual engagement along a single element, that is, the frame. Providing a frame may also have the advantage of easy assembly of the different operating parts, apart from the casing, of the valve. Providing a frame may also have the advantage of enabling assembly of operating parts of the valve before positioning the operating parts of the valve in the casing. Furthermore, providing a frame may also have the advantage of enabling testing operating parts and testing operation of the operating parts of the valve, before positioning the operating parts of the valve in the casing.

In one embodiment, the closing element is constantly biased towards the first position to a normally closed position by a biasing torque rotating the spindle of the motor, such as a stepper motor, in a first rotational direction, possibly by a spring rotating the spindle, and wherein the first rotational direction of the spindle is capable of moving the closing element to the first position, where the closing element closes the one or more orifices of the center element, thereby not allowing fluid to pass the orifices, in case an operating torque rotating the spindle of the motor in another rotational direction, which is opposite to the first rotational direction, decreases to a value less than the biasing torque. By providing a biasing torque to the spindle with said biasing torque at some point being larger than an operating torque and biasing the closing element towards the first position of the closing element, the valve can be provided as a normally closed valve.

In another embodiment, the closing element is constantly biased towards the second position to a normally open position by a biasing torque rotating the spindle of the motor, such as a stepper motor, in a second rotational direction, possibly by a spring rotating the spindle, and wherein the second rotational direction of the spindle is capable of moving the closing element to the second position, where the closing element opens the one or more orifices of the center tube, thereby allowing fluid to pass the orifices, in case an operating torque rotating the spindle of the motor in another rotational direction, which is opposite to the one rotational direction, decreases to a value less than the biasing torque. By providing a biasing torque to the spindle with said biasing torque at some point being larger than an operating torque and biasing the closing element towards the second position of the closing element, the valve can be provided as a normally open valve.

The valve according to the invention may comprise a the casing being made by at least a first casing part and a second casing part, where the first casing part is provided with a first connecting flange, said first connecting flange intended for a connecting pipe for the valve, and said first connecting flange at least partly supporting the center element, and where at least the center element and the actuator both are supported only by the first casing part, and where the second casing part is provided with a second connecting flange intended for a connecting pipe for the valve, said second casing part not supporting the center element and the actuator.

Only the first casing part, and not the second casing part, supporting the actuator and the center element has the advantage that operation and structural integrity of the operating parts of the valve are not dependent on mutual joining of casing parts. Also, only the first casing part, and not the second casing part, supporting the actuator and the center element has the advantage of enabling easy assembly of the valve. The operating parts only need to be positioned in relation to the first casing part, not in relation to the second casing part, and positioning of the operating parts is not dependent on subsequent mutual joining of the first and second casing parts.

The first casing part may be provided with a first screw thread and the second casing part may be provided with a second screw thread, and the first screw thread and the second screw thread being mutually assembled to connect the first casing part and the second casing part to form the casing. According to this embodiment, the first casing part and the second casing part are assembled in a reversible manner, making it possible to dissemble the casing by de-engaging the first and second screw threads, making it possible to inspect the operating parts of the valve, or to repair or replace the operating parts of the valve inside the casing.

In one alternative embodiment, the first casing part and the second casing part are connected using other kinds of reversible connecting means than screw threads, for instance a snap fit connection. As another alternative, the first casing part and the second casing part are connected to each other in a non-dissemble manner, such as by welding.

The first casing part and the second casing part may be substantially identical, reducing the number of different parts necessary for the valve and lowering the manufacturing costs. As an alternative, the first casing part and the second casing part may have different sizes and/or shapes. For instance, one of the casing parts may be larger than the other casing part and may constitute most of the casing, while the other casing part may constitute a closing end part of the casing. The larger casing part may be used for mounting the operating parts of the valve inside the valve, and the smaller casing part may be used for closing the casing when the operating parts of the valve have been mounted inside the larger casing part.

An external electrical connecter providing electrical power for the actuator, preferably for a motor of the actuator, may be positioned in a side wall of the casing in a position along a circumference of the casing corresponding to a position of an electrical connecter of the actuator, providing a possibility of connecting the external electrical connecter directly with the electrical connecter of the actuator without wires leading from the external electrical connecter to the electrical connecter of the actuator. Hermetic sealing of the connection is provided between the external electrical connecter and the electrical connector of the actuator.

The external electrical connecter or the electrical connecter of the actuator may be mounted on a flexible mechanical link. The connecters can be displaced from side to side without risking that electrical terminals of the connecters are damaged.

A shielding plate may be mounted adjacent to a motor of the actuator, the shielding plate shielding the motor from fluid flowing through the valve. The shielding plate may protect the motor against dirt or impurities in the fluid flowing through the valve. The shielding plate may be an alternative to an encapsulation of the motor.

The shielding plate may have a shape which guides the fluid flow past the motor in a smooth manner, preventing or reducing turbulence in the fluid flow through the valve. For instance, the shielding plate may have a conical or pyramidal shape with a tip of the conical or pyramidal shape directed towards the fluid flow, directed opposite to the fluid flow direction.

The shielding plate may further be mounted adjacent to electrical connecters providing wiring for the actuator, the shielding plate shielding the electrical connecters from fluid flowing through the valve. According to this embodiment, the shielding plate may be used for shielding the motor as well as any wiring provided between electrical connecters. The shielding plate may have one or more extensions extending between the shielding plate and an inner circumference of the casing. The extensions have the same function as the extensions formed on the frame and described above.

A possible and preferred way of assembling the valve is provided by a method comprising the following steps:
- providing a frame having at least a connecting part and a planar part being mutually displaced along a longitudinal extension of the frame,
- providing a center element with part of the center element being joined with the connecting part of the frame,
- providing an actuator comprising a motor, a spindle and a slider, said actuator being preassembled,
- mounting the actuator with the slider along or in extension of a sidewall of the center element,
- joining the motor of the actuator to a planar part of the frame, when the slider has been mounted along or in extension of the center element,
- mounting the frame together with the actuator to an inner circumference of a first casing part of the valve,
- mounting the one end of the center element to a connecting flange of the first casing part of the valve, and
- mounting a second casing part of the valve to the first casing part of the valve, thereby enclosing the actuator and the center element in the casing of the valve.

The method mentioned of assembling the valve has the advantage that operation and structural integrity of the operating parts of the valve are not dependent on mutual joining of casing parts. Also, the method mentioned of assembling the valve has the advantage of enabling easy assembly of the valve. The operating parts only need to be positioned in relation to the first casing part, not in relation to the second casing part, and non-dependent on subsequent mutual joining of casing parts. Furthermore, providing an actuator comprising a motor, a spindle and a slider, where said actuator is preassembled, may have the advantage of enabling testing operating parts and testing operation of the operating parts of the valve, before positioning the operating parts of the valve in the casing.

In the embodiment, where the center element is a center tube provided with one or more orifices along the sidewall of the center tube, a sealing may be provided between the sidewall surface of the center tube and the sidewall surface of the closing element facing each other. The sealing may be a sealing placed between the closing element and the center tube. When the closing element is in the first position, the sealing makes a tight seal against fluid flowing through the valve. Having the orifices in the sidewall of the center tube allows the closing element to close the orifices, making the valve simple and effective.

Furthermore, the orifices allowing the fluid flowing through the sidewall, balances the valve in such a manner, that any pressure differential acting between an inlet and an outlet of the valve will act obliquely, preferably perpendicular, to the longitudinal axis of the center tube, preferably along the full circumference of the sidewalls, the pressure differential thereby being equalized. The forces from the pressure differential acting obliquely to the longitudinal axis of the center tube makes it possible to have only one level of gearing of the actuator when moving the valve body, and the demand for actuator force is kept low, even at high differential pressures, making the construction simple and inexpensive because of no additional gearing of the actuator is needed.

Preferably, several orifices are placed in a symmetric manner in the sidewall of the center tube. All the orifices may have the same shape, rectangular or alternatively the orifices may have different shapes, like triangles, circles, drop-shaped or other geometric shapes allowing better flow control. The size of each of the orifices can also vary as well as the location in the sidewall, for instance the distance from the orifice to the end of the center tube, can be different.

The valve according to the invention makes it possible to implement a NO (normally open) or NC (normally closed) function. Incorporating a NO (normally open) or NC (normally closed) function may, as mentioned, be established by implementing a biasing element such as a spiral spring, acting with a constant torque on a spindle of the motor. The biasing element will make the closing element return to its closed or open position, if an actuating force from the motor is less than the force from the biasing element, such as if the motor loses power. When the motor is to actuate the closing element, the motor needs to provide a force with a constant force, apart from the force for actuating the closing element, in order to balance out the torque from the spring.

Integration of critical tolerances and geometry in the parts makes assembly and production independent of critical process control, thus reducing rejects.

The valve is an axial bi-flow valve and can for instance be used for commercial refrigeration systems in the range of 12.5 - 150 Ton of refrigeration.

### BRIEF DESCRIPTION OF THE DRAWINGS

FIG. 1 is a cross sectional view of a first embodiment of a valve in an open position,
FIG. 2 is a cross sectional view of the embodiment of the valve in Fig. 1 in an almost closed position, and
FIG. 3 is a cross sectional view of a second embodiment of a valve in an almost closed position
FIG. 4 is a cross sectional view of a third embodiment of a valve in a fully open position.

### DETAILED DESCRIPTION OF A PREFERRED EMBODIMENT

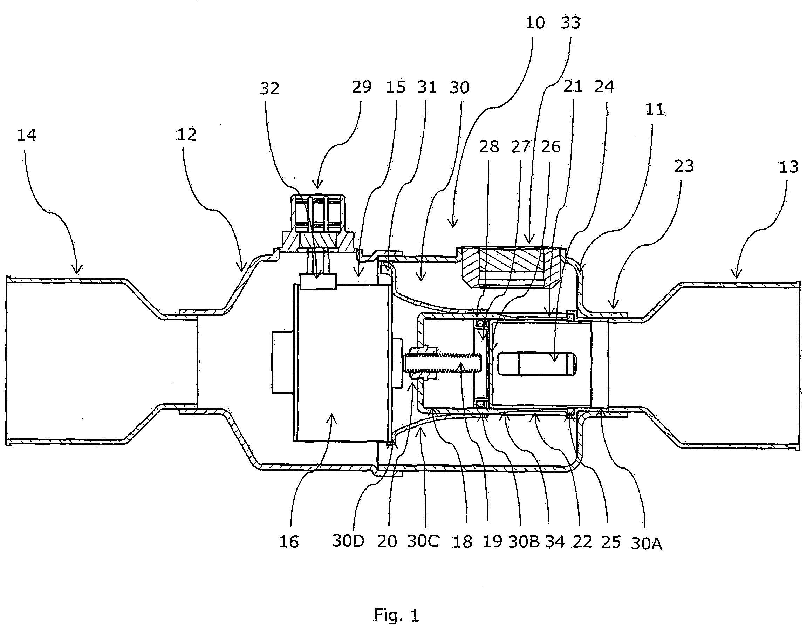

Fig. 1 shows an embodiment of a valve 10 with a first casing part 11 and a second casing part 12 and connecting pipes 13, 14 leading to the valve. The connecting pipes 13, 14 are fixed to connecting flanges of the first casing part 11 and the second casing part 12, respectively. The valve 10 is a bi-flow valve, that is, flow in both directions through the valve is possible. Inside the casing, an actuator 15 is provided. The actuator 15 comprises an electrical stepper motor 16. The actuator 15 also comprises a spindle 19 for operating a closing element 18, 20. The closing element 18, 20 comprises a cup-shaped slider 18 and, in the embodiment shown, also a separate nut 20 mounted in a base of the cup-shaped slider 18. The nut 20 is provided with an internal thread cooperating with an external thread of the spindle 19. In an alternative embodiment, the closing element 18, 20 does not comprise a nut, the spindle 19 operating the cup-shaped slider 18 directly by an Internal thread being provided as an integrate part of the base of the cup-shaped slider 18, instead of the spindle 19 operating the closing element 18, 20 via an Internal thread of a separate element such as the nut 20.

The closing element 18, 20 forms a cup-shaped slider 18, and inside at least part of the hollow cavity of the cup-shaped slider 18 is a center element, which in the embodiment shown is a center tube 21. The center tube 21 is fixed to the first casing part 11 by the center tube 21 being inserted into a connecting part 30A of the frame 30, which connecting part 30A of the frame 30 is inserted into a connecting flange 23 of the first casing 11. An intermediate part 30B of the frame, between a funnel-shaped part 30C of the frame 30 and the connecting part 30A of the frame, is provided with orifices 22 for allowing fluid flow there-through. The center tube 21 comprises orifices 24 in the sidewall of the center tube 21 for allowing fluid flow there-through, either from the orifices of the intermediate part 30B of the frame, through the orifices of the center tube, into the center tube and to the connecting pipe 13 leading to the first casing part 11, or vice versa, from the connecting pipe 13 leading to the first casing part 11, to the interior of the center tube, through the orifices 24 of the center tube, and through the orifices 22 of the intermediate part 30B of the frame. A sealing 25 is provided for sealing off the flow of fluid, when the closing element 18, 20 is in a fully closed position. The connecting part 30A of the frame 30 has a recess for holding the sealing 25 to the connecting part of the frame 30.

The center tube 21 has a base 26, so that the center tube 21 is cup-shaped, similar to the cup-shaped slider 18. Thereby, the interaction between the center tube 21 and the cup-shaped slider 18 is an inner circumference of the cup-shaped slider 18 sliding along an outer circumference of the center tube 21. Between the base 26 of the center tube 21 and the base of the cup-shaped slider 18, an end cap 27 is provided. The end cap 27 is fixed to the base 26 of the center tube 21. The end cap 27 is provided with a recess for holding a sealing 28 to the end cap 27. The end cap 27 and the sealing 28 are opposite to the connecting part of the frame 30 and the sealing 25. The sealing 28 seals off the base 26 of the center tube 21 and the base of the cup-shaped slider 18, and the sealing 28 seals off any flow of fluid to the nut 20, to the spindle 19 and to the motor 16.

The sealing 28 also seals off one part of the valve having a high pressure and another part of the valve having a low pressure, depending on the flow direction of the fluid through the valve. As example, if the flow direction of fluid through the valve is from right to left in the figure, the high pressure is in the connecting pipe 13 and in the inside of the center tube, while the low pressure is the part of the valve extending from the outside of the center tube 21 to the connecting pipe 14. The sealing 28 is provided in a position, where fluid pressure may be at least partly equalized, if not a proper sealing, like the sealing 28, is provided.

A connection 29 is used for wiring (wires not shown) to the motor 16, the opening in the connection 29 being sealed by, e.g. , a glass seal. The connection 29 is positioned in the second case part 12 in a position along the circumference of the second casing part corresponding to the position of a mating connection 32 of the motor 16, when the actuator 15 is placed in the valve casing. Thereby, it is possible to connect the connector 29 with the mating connector 32 of the motor 16 without wires leading from the connector 29 to the mating connector 32 of the motor 16. Thereby, it is also possible to provide a hermetic connection between the connector 29 and the mating connector 32 of the motor 16.

A sight glass 33 is provided in the first casing part 11 in a position along the circumference of the first casing part 11 corresponding to a position of the intermediate part 30B of the frame, when the frame 30 is placed in the valve casing. By providing a sight glass 33 in the position shown, it is not only possible to detect any bubbles in the fluid passing the valve, like a refrigerant, but it is also possible, without having to dissemble the casing 11, 12, to control the function of the slider 18 and/or to detect any faults of at least part of the slider 18 and/or to detect and control the movement of the slider 18 between the first position and the second position, and vice versa.

The slider 18 may be provided with a visual dial indicating the position of the slider 18 relative to the center tube 21. The dial may be inspected visually via the sight glass 33, and thereby it is possible to investigate whether or not a given movement of the motor 16 results in an expected movement of the slider 18, without dissembling the valve.

The position of the sight glass 33 along the circumference of the casing, relative to components arranged inside the casing, can be selected simply by rotating the first casing part 11 and the second casing part 12 relative to each other. Thereby the sight glass 33 can be arranged in a position which allows desired parts of the valve to be seen through the sight glass 33, making it possible to visually inspect these parts.

In a possible embodiment, a biasing element (not shown), preferably a spring, is provided in a position between the motor 16 and the base of the cup-shaped slider 18. The biasing element is preferably biasing the slider 18 towards the first, fully closed, position. Alternatively, the biasing element is biasing the slider 18 towards the second, fully open, position. The biasing element results in any play between the internal thread of the nut 20 and the external thread of the spindle 18 is eliminated, thereby eliminating hysteresis when operating the motor 16, rotating the spindle 19 and moving the slider 18 along the center tube 21.

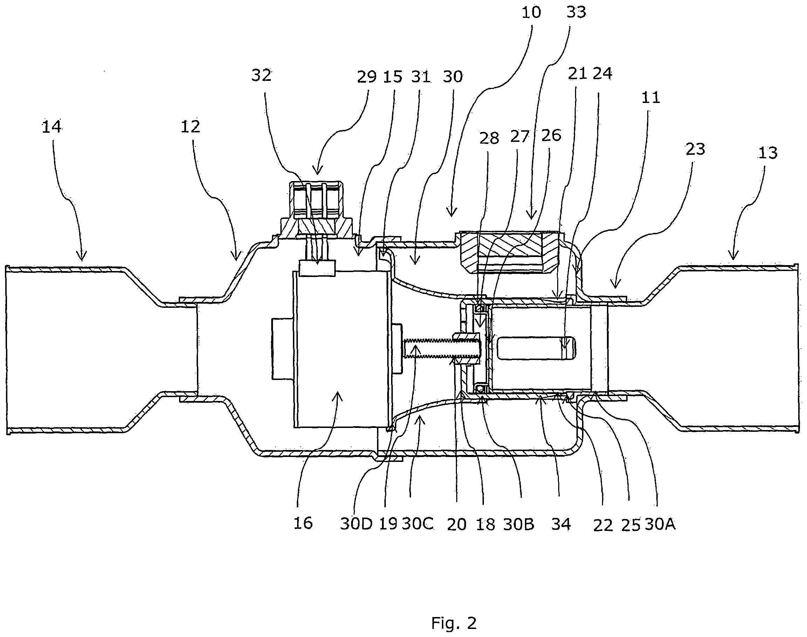

The motor 16 is supported by the planar part 30D (left side in Fig. 2) of the frame 30. The frame 30 has a number of extensions 31 extending from the planar part of the frame 30. In the cross-sectional view of the figure, only one extension 31 is shown. In the embodiment shown, there are three extensions, the two other extensions not visible in the cross-sectional view, and the three extensions separated by 120 degrees along a circumference of the planar part of the frame 30. Preferably, three or more extensions 31 are provided along the circumference of the planar part of the frame 30. The extensions 31 extend between the planar part 30D of the frame 30 and an inner circumference of the first casing part 11.

The motor 16 is fixed to the planar part 30D of the frame 30 and is positioned in the center of the casing. The motor 16 is supported in relation to the casing by the planar part 30D of the frame 30 and the extensions 31. One end of the center tube 21 is fixed to the connecting part 30A of the frame 30 and an opposite end of the center tube 21 is supported along an inner circumference of the slider 18. The center tube 21 is positioned in the center of the first casing part 11.

Fig. 1 shows the valve in an operational mode in which the closing element 18, 20 is in a position allowing flow of fluid, such as a refrigerant, through the orifices 24 of the center tube 21. Either, the fluid flows from right to left in the figure, from the connecting pipe 13, into the center tube 21, through the orifices 24, along the funnels-shaped part 30C of the frame 30, past the extension 31, past the motor 16 and to the connecting pipe 14. Or, the fluid flows from left to right in the figure, from the connecting pipe 14, past the motor 16, past the extensions 31, and past the funnel-shaped part 30C of the frame 30, through the orifices 24, into the center tube 21 and to the connecting pipe 13.

The closing element 18, 20 is cup-shaped, with a nut 20 with an internal screw thread cooperating with the external thread of the spindle 19. When an electrical current is applied to the motor 16, the rotation of the spindle 19 is transformed into a linear movement of the closing element 18, 20, due to the cooperating internal screw thread 25 of the nut 20 and external screw thread 26 of the spindle 19. When moving the closing element towards a second position (to the left in Fig. 1), the orifices 24 in the center tube 21 are exposed more and more, and the flow of fluid is increased incrementally. When moving the closing element 18, 20 to a first position (to the right in Fig. 1), the orifices 24 are closed more and more, and the flow of fluid is decreased incrementally.

Fig. 2 shows the valve in an almost fully closed position, where the closing element 18, 20 has been moved far towards the sealing 25 (almost fully to the right in Fig. 2). In a fully closed position, where the closing element is moved as far as possible towards the sealing 25 (fully to the right in Fig. 2), the closing element 18, 20 acts as a seal, closing the orifices 24, with a rim of the cup-shaped slider 18, at an outermost part 34 of the cup-shaped slider 18, being in abutment with the sealing 25, thereby shutting off the valve completely.

In the embodiment shown, where the sealing 25 has a circumference corresponding to the circumference of the rim of the cup-shaped slider 18, an advantage is that no sliding movement occurs between an inner circumference, or an outer circumference, of the cup-shaped slider 18 and a corresponding outer circumference, or a corresponding inner circumference, of the sealing 25, respectively. When the valve is fully closed, the rim of the cup-shaped slider 18 is abutting the sealing 25, with no sliding movement against the sealing, only resulting in the sealing being slightly compressed. No sliding movement increases a life time of the sealing 25, and increased lifetime of the sealing 25 reduces the risk of leakage of the valve, when the valve is fully closed.

The sealing 28 and the inner circumference of the cup-shaped slider 18 being in abutment with the sealing 28 may be viewed as precautionary feature for the cup-shaped slider 18 shutting off the valve completely. Additionally or alternatively, the sealing 25 and the rim of the cup-shaped slider 18 being in abutment with sealing 25 may be viewed as precautionary feature for the cup-shaped slider shutting off the valve completely.

An inner circumference of the cup-shaped slider and an outer circumference of the center tube are or may become in abutment, and the abutment may be sufficient for the cup-shaped slider shutting off the valve completely. Accordingly, if abutment between the inner circumference of the cup-shaped slider and outer circumference of the center tube is provided, and the abutment is sufficient for the cup-shaped slider shutting off the valve completely, the sealing 28 and/or the sealing 25 may be omitted from the valve.

The structure of the valve has an advantage in relation to assembling the valve, and may have an advantage in relation to servicing the valve and in relation to possibly exchanging parts of the valve, depending on the manner of joining the different parts of the valve, either by laser welding providing a hermetically enclosure by the casing, or by assembling the first case part and the second part by soldering, brazing, screwing or other means of joining, said means not being laser welding, possibly not providing a hermetical enclosure, but enabling dismantling for service and/or displacement of, as example, the actuator. As an alternative, the casing parts 11, 12 may be assembled in a reversible manner, e.g. by means of mating screw threads formed on the casing parts 11, 12.

Assembling the valve may take place by the following method: The frame 30 with the extensions 31 is provided. The actuator 15 with the motor 16, the closing element 18, 20 with the cup-shaped slider 18 and the nut 20, and the spindle 19 is assembled. The actuator is fixed to the planar part of the frame 30 with the cup-shaped slider 18 protruding from the funnel-shaped part 30C of the frame 30 and the motor 15 protruding to the opposite from the planar part of the frame 30. The first casing part 11 is provided and the center tube is provided. The flange 22 of the center tube is fixed to the frame 30 of the first casing part 11.

The assembled actuator, that is the motor 16, the closing element 18, 20 with the cup-shaped slider 18 and the nut 20 and the spindle 19, is inserted into the first casing part 11. The inner circumference of the cup-shaped slider 18 is slid along the outer circumference of the center tube 21. Also, an outermost end of the funnel-shaped part 30C of the frame 30 is slid along the end 22 of the center tube 21. The extensions 31 are positioned along the inner circumference of the first casing part 11. Finally, the second casing part 12 is fixed to the first casing part 11. In the embodiment shown, fixing of the second casing part 12 to the first casing part 11 is performed by an inner circumference of a flange of the second casing part 12 engaging an outer circumference of the first casing part 11. The structure of the valve according to the invention is now completed, with the actuator and the center tube positioned inside the casing, and with the actuator and the center tube supported by the frame 30 and the extensions 31 extending to the inner surface of the casing.

The actuator 15 and the center tube 21 are supported only by the first casing part 11, resulting in assembling the valve being very easy and assembling the valve capable of being performed with the first casing part 11 as the structural part integrating the actuator and the center tube. The second casing part 12 of the valve only constitutes a supplementary part of the valve for constituting part of the casing and for providing the connecting tube 14 at the end of the casing opposite to the connecting tube 13 of the first casing part 11 of the valve. The casing provides an enclosure for the actuator 15 and the center tube 21, but the casing as such is not critical for the function of the actuator 15 in collaboration with the center tube 21. The frame 30 is the structure of the valve 10 enabling mutual alignment and structural relationship between the actuator 15 and the center tube 21, and the frame 30 itself enables proper functioning of the actuator 15 in collaboration with the center tube 21.

A first solution is to manufacture the center tube and/or the cup-shaped slider by deep drawing and machining. The material may be copper, stainless steel or bimetal. By using bimetal parts, the parts can be laser-welded, and still be soldable.

A second solution is to manufacture the center tube and/or the cup-shaped slider by metal injection molding. The fairly small size and the geometry of the center tube and the cup-shaped slider make the center tube and the cup-shaped slider suitable for metal injection molding. Metal injection molding may reduce costs because of limiting the amount of metal used for manufacturing the center tube and/or by minimizing subsequent machining operations to the parts where a certain geometry or surface texture is needed.

A third solution is to use a machined standard tube for the center tube and a standard cup for the cup-shaped slider, as all the geometries and features lies along the same axis, the use of a machined standard tube and/or the machined standard cup-shaped slider may be price competitive. A machined standard tube and/or cup-shaped slider also reduce the stress on the center tube as any differential pressure over the valve only act radially outwards or inwards on the center tube and/or the cup-shaped slider, not causing any significant bending stresses part of the center tube and/or the cup-shaped slider.

The different parts of the valve, and which must not only be connected, but which must also be joined, is preferably provided by means of laser welding. Laser welding ensures that the valve is hermetically sealed. Especially joining of the connecting flange 23 of the first casing part 11 and the connecting pipe 13 leading to the valve, joining of the connecting flange of the second casing part 12 and the connecting pipe 14 leading to the valve, and joining of the first casing part 11 to the second casing part 12 is provided by means of laser welding.

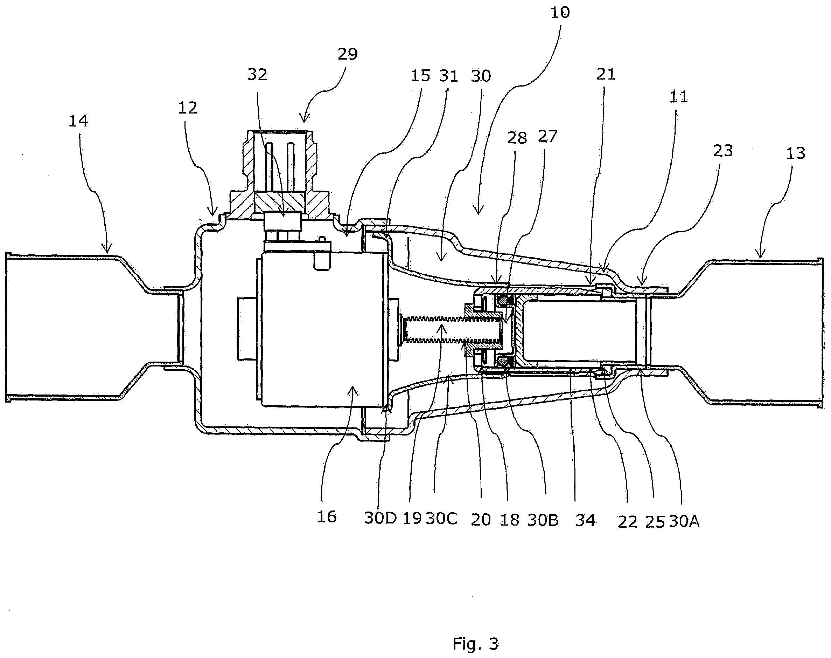

Fig. 3 is a cross sectional view of a valve 10 according to a second embodiment of the invention in an almost closed position. The valve 10 of Fig. 3 is very similar to the valve 10 of Figs. 1 and 2. The valve 10 of Fig. 3 is not provided with a sight glass, allowing the valve casing to be smaller than the valve casing of the valve 10 of Figs. 1 and 2. The valve 10 of Fig. 3 is suitable for use in refrigeration systems where the space available for the valve 10 is limited, or where there is no need for a sight glass, or where the price of the valve needs to be limited due to possible small refrigeration systems and/or the use of many valves. The valve 10 of Fig. 3 can be operated in the same manner as the valve 10 shown in Figs. 1 and 2, as described above.

The second embodiment of a valve 10 is shown with a first casing part 11 and a second casing part 12 and connecting pipes 13, 14 leading to the valve. The connecting pipes 13, 14 are fixed to connecting flanges of the first casing part 11 and the second casing part 12, respectively. The valve 10 is a bi-flow valve, that is, flow in both directions through the valve is possible. Inside the casing, an actuator 15 is provided. The actuator 15 comprises an electrical stepper motor 16. The actuator 15 also comprises a spindle 19 for operating a closing element 18, 20. The closing element 18, 20 comprises a cup-shaped slider 18 and, in the embodiment shown, also a separate nut 20 mounted in a base of the cup-shaped slider 18. The nut 20 is provided with an internal thread cooperating with an external thread of the spindle 19. In an alternative embodiment, the closing element 18, 20 does not comprise a nut, the spindle 19 operating the cup-shaped slider 18 directly by an internal thread being provided as an integrate part of the base of the cup-shaped slider 18, instead of the spindle 19 operating the closing element 18, 20 via an internal thread of a separate element such as the nut 20.

The closing element 18, 20 forms a cup-shaped slider 18, and inside at least part of the hollow cavity of the cup-shaped slider 18 is a center element, which in the embodiment shown is a center tube 21. The center tube 21 is fixed to the first casing part 11 by the center tube 21 being inserted into a connecting part 30A of the frame 30, which connecting part 30A of the frame 30 is inserted into a connecting flange 23 of the first casing 11. An intermediate part 30B of the frame, between a funnel-shaped part 30C of the frame 30 and the connecting part 30A of the frame, is provided with orifices 22 for allowing fluid flow there-through. The center tube 21 comprises orifices 24 in the sidewall of the center tube 21 for allowing fluid flow there-through, either from the orifices of the intermediate part 30B of the frame, through the orifices of the center tube, into the center tube and to the connecting pipe 13 leading to the first casing part 11, or vice versa, from the connecting pipe 13 leading to the first casing part 11, to the interior of the center tube, through the orifices 24 of the center tube, and through the orifices 22 of the intermediate part 30B of the frame. A sealing 25 is provided for sealing off the flow of fluid, when the closing element 18, 20 is in a fully closed position. The connecting part 30A of the frame 30 has a recess for holding the sealing 25 to the connecting part of the frame 30.

The center tube 21 has a base 26, so that the center tube 21 is cup-shaped, similar to the cup-shaped slider 18. Thereby, the interaction between the center tube 21 and the cup-shaped slider 18 is an inner circumference of the cup-shaped slider 18 sliding along an outer circumference of the center tube 21. Between the base 26 of the center tube 21 and the base of the cup-shaped slider 18, an end cap 27 is provided. The end cap 27 is fixed to the base 26 of the center tube 21. The end cap 27 is provided with a recess for holding a sealing 28 to the end cap 27. The end cap 27 and the sealing 28 are opposite to the connecting part of the frame 30 and the sealing 25. The sealing 28 seals off the base 26 of the center tube 21 and the base of the cup-shaped slider 18, and the sealing 28 seals off any flow of fluid to the nut 20, to the spindle 19 and to the motor 16.

The sealing 28 also seals off one part of the valve having a high pressure and another part of the valve having a low pressure, depending on the flow direction of the fluid through the valve. As example, if the flow direction of fluid through the valve is from right to left in the figure, the high pressure is in the connecting pipe 13 and in the inside of the center tube, while the low pressure is the part of the valve extending from the outside of the center tube 21 to the connecting pipe 14. The sealing 28 is provided in a position, where fluid pressure may be at least partly equalized, if not a proper sealing, like the sealing 28, is provided.

A connection 29 is used for wiring (wires not shown) to the motor 16, the opening in the connection 29 being sealed by, e.g., a glass seal. The connection 29 is positioned in the second case part 12 in a position along the circumference of the second casing part corresponding to the position of a mating connection 32 of the motor 16, when the actuator 15 is placed in the valve casing. Thereby, it is possible to connect the connector 29 with the mating connector 32 of the motor 16 without wires leading from the connector 29 to the mating connector 32 of the motor 16. Thereby, it is also possible to provide a hermetic connection between the connector 29 and the mating connector 32 of the motor 16.

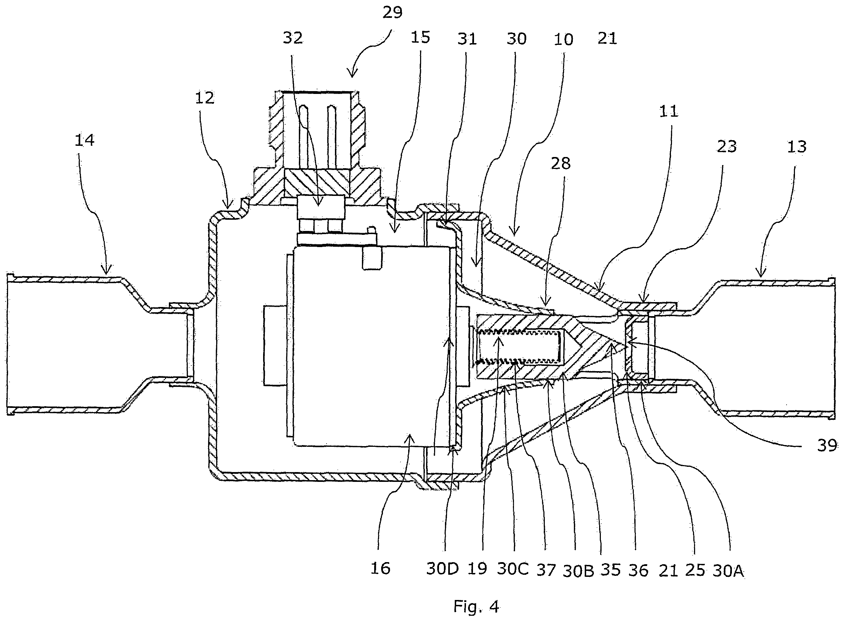

Fig. 4 is a cross sectional view of a valve 10 according to a third embodiment of the invention in a fully open position. The valve 10 of Fig. 4 is not provided with a sight glass, allowing the valve casing to be smaller than the valve casing of the valve 10 of Figs. 1 and 2. The valve 10 of Fig. 4 is suitable for use in refrigeration systems where the space available for the valve 10 is limited, or where there is no need for a sight glass, or where the price of the valve needs to be limited due to possible small refrigeration systems and/or the use of many valves. The valve 10 of Fig. 4 can be operated in the same manner as the valve 10 shown in Figs. 1, 2 and 3, as described above.

The third embodiment of a valve 10 is shown with a first casing part 11 and a second casing part 12 and connecting pipes 13, 14 leading to the valve. The connecting pipes 13, 14 are fixed to connecting flanges of the first casing part 11 and the second casing part 12, respectively. The valve 10 is a bi-flow valve, that is, flow in both directions through the valve is possible. Inside the casing, an actuator 15 is provided. The actuator 15 comprises an electrical stepper motor 16. The actuator 15 also comprises a spindle 19 for operating a closing element 35. The closing element 35 comprises a pointed slider 36. A screw thread 37 is provided with an internal thread cooperating with an external thread of the spindle 19. In an alternative embodiment, the closing element 35 comprises a nut, the spindle 19 operating the pointed slider 35 via an internal thread of the nut, and the not being fixed to the base of the pointed slider 35, instead of the spindle 19 operating the closing element 35 directly via the internal screw thread 37 of the pointed slider 35.

The closing element 35 forms a pointed slider 35, and inside at least part of the hollow cavity of the pointed slider 18 is a center element, which in the embodiment shown is a center bracket 38. The center bracket 38 is fixed to the first casing part 11 by the center bracket 38 being inserted into a connecting part 30A of the frame 30, which connecting part 30A of the frame 30 is inserted into a connecting flange 23 of the first casing 11. An intermediate part 30B of the frame 30, between a funnel-shaped part 30C of the frame 30 and the connecting part 30A of the frame 30, is provided with orifices 22 for allowing fluid flow there-through. The center bracket 38 comprises an orifice 39 in a wall of the center bracket 38 for allowing fluid flow there-through, either from the orifices of the intermediate part 30B of the frame, through the orifices of the center tube, into the center tube and to the connecting pipe 13 leading to the first casing part 11, or vice versa, from the connecting pipe 13 leading to the first casing part 11, to the interior of the center tube, through the orifices 24 of the center tube, and through the orifices 22 of the intermediate part 30B of the frame. A sealing (not shown) may be provided along a circumference of the orifice 39 for sealing off the flow of fluid, when the closing element 35 is in a fully closed position.

In a preferred embodiment of the valve the center element is a center bracket 38 placed obliquely to the longitudinal extension of the valve, the closing element 35 being placed in extension of the center bracket 38, and said closing element 35 at least partly abutting a sidewall of the center bracket 38, when in the first position.

Preferably the actuator 15 comprises a stepper motor 16, and the stepper motor 16 constitutes part of the stationary element 16, 30, 31, and a spindle 19 of the stepper motor 16 is movable along a longitudinal direction in relation to the stationary part 16, 30, 31, said spindle capable of moving the closing element between the first position and the second position.

In a preferred embodiment of the valve the stationary element comprises an intermediate part 30B of the frame 30 and a connecting part 30A of the frame 30, said intermediate part 30B of the frame and said connecting part 30A of the frame 30 being positioned displaced from each other along the longitudinal extension of the valve, and wherein one end of the center tube 21 is fixed to the connecting part 30A of the frame 30, and a second end of the center tube 21 is fixed to the intermediate part 30B of the frame 30, so that the longitudinal extension of the center tube 21 is aligned with a longitudinal extension of the stationary element 16, 30, 31.

Preferably the slider 18 of the closing element extends along an inner surface of the sidewall of the center tube 21.

Alternatively the slider 18 of the closing element extends along an outer surface of the sidewall of the center tube 21.

In a preferred embodiment of the valve the spindle 19 of the motor 16 is provided with a screw thread, and at a base of the slider 18 a screw thread is provided, said screw thread of the spindle 19 and said screw thread at the base of the slider 18 being mutually engaged, and wherein a rotational movement of the spindle 19 is transformed to an axial movement of the slider 18 of the closing element in relation to the center tube 21.

Preferably the slider 18 is constantly biased towards the first position by a biasing element, preferably a spring, with a biasing force, alternatively towards the second position by a biasing element, preferably a spring, with a biasing force, and wherein the biasing element is capable of constantly maintaining a mutual engagement, free of play, between the slider 18 and the spindle 19, thereby taking up any play between the internal thread of the base of the slider 18 and the external thread of the spindle 19.

Preferably the screw thread at the base of the slider 18 is provided in a nut 20 mounted in the base of the slider 18.

In a preferred embodiment of the valve the closing element 18, 20, 35 is constantly biased towards the first position to a normally closed position by a biasing torque rotating the spindle 19 of the motor 16 in a first rotational direction, possibly by a spring rotating the spindle, and wherein the first rotational direction of the spindle is capable of moving the closing element 18, 20, 35 to the first position, where the closing element 18, 20, 35 closes the one or more orifices 24, 39 of the center element 21, 38, thereby not allowing fluid to pass the orifices 24, 39, in case an operating torque rotating the spindle 19 of the motor 16 in another rotational direction, which is opposite to the first rotational direction, decreases to a value less than the biasing torque.

Alternatively the closing element is constantly biased towards the second position to a normally open position by a biasing torque rotating the spindle 19 of the motor 16 in a second rotational direction, possibly by a spring rotating the spindle 19, and wherein the second rotational direction of the spindle 19 is capable of moving the closing element to the second position, where the closing element 18, 20, 35 opens the one or more orifices of the center element 21, 38, thereby allowing fluid to pass the orifices 24, 39, in case an operating torque rotating the spindle 19 of the motor 16 in another rotational direction, which is opposite to the one rotational direction, decreases to a value less than the biasing torque.

In a preferred embodiment of the valve the one or more orifices 24 of the center tube 21 are positioned in a sidewall of the center tube 21, allowing fluid to pass to or from an inside of the center tube 21, through the sidewall of the center tube 21, when the closing element is not in the first position.

Alternatively the one or more orifices 39 of the center bracket 39 are positioned in a sidewall of the center bracket 39, allowing fluid to pass through the center bracket 38, through the sidewall of the center tube 38, when the closing element is not in the first position.

Preferably the first casing part 11 is provided with a first screw thread and the second casing part 12 is provided with a second screw thread, and where the first screw thread and the second screw thread being mutually engaged to connect the first casing part 11 and the second casing part 12 to form the casing.

Preferably the shielding plate is further mounted adjacent to a connection 29 providing wiring for the actuator, the shielding plate further shielding the connection 29 from fluid flowing through the valve.

Preferably the shielding plate has one or more extensions extending between the shielding plate and an inner circumference of the casing.

The invention is described wit reference to specific embodiments as shown in the figures. Other embodiments with the scope of the claims may be derived, and the embodiments shown in the figures are not to be construed as a limitation to the scope of the claims.

## Claims

1. A valve (10) comprising a casing (11, 12) and an actuator (15), the actuator comprising an element (16, 30, 31) being stationary in relation to the casing (11, 12) of the valve (10) and a closing element (18, 20, 35) being placed inside the casing (11, 12) and being movable in relation to the casing (11, 12) of the valve (10),
- the valve (10) having a substantially longitudinal extension along a prevailing flow direction of fluid through the valve (10),
- the stationary element (16, 30, 31) being supported by an inner circumference of the casing (11, 12) and being in a fixed position in relation to the inner circumference of the casing (11, 12),
- the valve (10) comprising a center element (21, 38) with one or more orifices (24, 39) for allowing fluid flow through the valve (10) and through the center element (21, 38), when the closing element (18, 20, 35) is not in a fully closed position, said center element (21, 38) being supported by the stationary element (16, 30, 31) and being in a fixed position in relation to the stationary element (16, 30, 31),
- the closing element (18, 20, 35) being placed along or in extension of the center element (21, 38), and said closing element (18, 20, 35) at least partly extending along or abutting a sidewall of the center element (21, 38), when in a first position, where the closing element (18, 20) closes the one or more orifices (24, 39),
- the closing element (18, 20, 35) being movable along the longitudinal extension of the valve (10) and in relation to the center element (21, 38) between the first position, where the closing element (18, 20) closes the one or more orifices (24, 39), thereby not allowing fluid to pass the one or more orifices (24, 39), and a second position, where the one or more orifices (24, 39) are open, thus allowing fluid to pass the one or more orifices (24, 39), wherein
the center element is a center tube (21) placed parallel in relation to the longitudinal extension of the valve, the closing element (18, 20) being placed along the center tube (21), and the closing element (18, 20) at least partly extending along a sidewall of the center tube (21), when in the first position, **characterized in that** a slider (18) of the closing element (18, 20) extends along an outer surface of the sidewall of the center tube (21), the center tube (21) being cup-shaped having a base (26), the slider (18) being cup-shaped having a base, an inner circumference of the cup-shaped slider (18) sliding along an outer circumference of the center tube (21), and an end cap (27) being provided between the base (26) of the center tube (21) and the base of the cup-shaped slider (18), the end cap (27) being fixed to the base (26) of the center tube (21) and being provided with a recess for holding a sealing (28) to the end cap (27).

2. A valve according to claim 1, wherein the actuator (15) comprises a stepper motor (16), and wherein the stepper motor (16) constitutes part of the stationary element (16, 30, 31), and wherein a spindle (19) of the stepper motor (16) is movable along a rotational direction in relation to the stationary part (16, 30, 31), said spindle capable of moving the closing element between the first position and the second position.

3. A valve according to claim 2, where the stepper motor (16) comprises an encapsulation of a stator and a rotor of the stepper motor, and wherein the encapsulation of the stator and rotor is supported by and is in a fixed position in relation to a frame (30) of the stationary element, said encapsulation providing a hermetic enclosure of the stator and the rotor in relation to the fluid passing through the valve.

4. A valve according to any of claims 1-3, wherein the center element (21) is at least partly supported by a frame (30) of the stationary element and is in a fixed position in relation to the frame (30) of the stationary element.

5. A valve according to any of claims 1-3, wherein a slider (18) of the closing element is positioned along a sidewall of the center tube (21), and wherein the slider (18) of the closing element is movably guided by the center tube (21), and wherein the slider (18) of the closing element at least partly is supported by the center tube (21).

6. A valve according to claim 2 and claim 5, wherein a longitudinal extension of the slider (18) of the closing element extends along the longitudinal extension of the center tube (21), and wherein only a part of the longitudinal extension of the slider (18) of the closing element extends along a sidewall of the center tube (21) during displacement of the closing element between the first position and the second position, and vice versa, and wherein another part of the slider (18) of the closing element is supported by the spindle (19) of the motor (16).

7. A valve according to claim 6, wherein a first end of the cup-shaped slider (18), in the first position of the closing element, is closing the one or more orifices, thereby not allowing fluid to pass the orifices, and in the second position of the closing element, is at least partly opening the one or more orifices, thus allowing fluid to pass the orifices, and where a second end of the slider (18), in both the first position and second position of the closing element, is supported by the spindle (19) of the motor (16).

8. A valve according to any of claims 1-7, where the stationary part comprises a frame (30), said frame (30) having a connecting part (30A) for connecting with a connecting flange (23) of the casing (11, 12), an intermediate part (30B) passing along the orifices (24) of the center tube (21), a funnel-shaped part (30C) passing a spindle (19) of the actuator (15), and a planar part (30D) for supporting a motor (16) of the actuator (15).

9. A valve according to any of claims 1-8, where the casing is made by at least a first casing part (11) and a second casing part (12), where the first casing part (11) is provided with a first connecting flange (23), said first connecting flange (23) intended for a connecting pipe (13) for the valve, and said first connecting flange (23) at least partly supporting an end of the center tube (21), and where at least the center tube (21) and the actuator (15) both are supported only by the first casing part (11), and where the second casing part (12) is provided with a second connecting flange intended for a connecting pipe (14) for the valve, said second casing part (12) not supporting the center tube (21) and the actuator (15).

10. A valve according to any of claims 1-9, where a connection (29) providing wiring for the actuator is positioned in a side wall of the casing in a position along a circumference of the casing corresponding to a position of a mating connection (32) of the actuator.

11. A valve according to any of claims 1-10, where a shielding plate is mounted adjacent to a motor of the actuator, the shielding plate shielding the motor from fluid flowing through the valve.

12. A method of assembling a valve according to any of claims 1-11, said method comprising the following steps:
- providing a frame (30) having at least a connecting part (30A) and a planar part (30D) being mutually displaced along a longitudinal extension of the frame,
- providing a center element (21,38) with part of the center element being joined with the connecting part (30A) of the frame (30),
- providing an actuator (15) comprising a motor (16), a spindle (19) and a slider (18), said actuator (15) being preassembled,
- mounting the actuator (15) with the slider (18, 35) along or in extension of a sidewall of the center element (21, 38),
- joining the motor (16) of the actuator to a planar part (30D) of the frame, when the slider (18, 35) has been mounted along or in extension of the center element (21, 38),
- mounting the frame (30) together with the actuator (15) to an inner circumference of a first casing part (11) of the valve,
- mounting the part of the center element (21, 38) to a connecting flange (23) of the first casing part (11) of the valve, and
- mounting a second casing part (12) of the valve to the first casing part (11) of the valve, thereby enclosing the actuator (15) and the center tube (21) in the casing of the valve, **characterized in that** the step of mounting the actuator (15) comprises sliding the slider (18) onto an outer surface of the sidewall of the center tube (21), wherein a cup-shaped center tube (21) having a base (26) and a cup-shaped slider (18) having a base is used, and an inner circumference of the cup-shaped slider (18) sliding along an outer circumference of the center tube (21), and an end cap (27) is provided between the base (26) of the cup-shaped slider (18), the end cap (27) is fixed to the base (26) of the center tube (21) and is provided with a recess for holding a sealing (28) to the end cap (27).

13. A vapor compression system, preferably a refrigeration system, with at least one valve along piping of the vapor compression cycle system, said at least one valve of the vapor compression system being a valve according to any of claims 1-11.

## Patentansprüche

1. Ventil (10) umfassend ein Gehäuse (11, 12) und einen Stellantrieb (15), wobei der Stellantrieb umfasst: ein im Verhältnis zum Gehäuse (11, 12) des Ventils (10) stationäres Element (16, 30, 31) und ein im Gehäuse (11, 12) angeordnetes Schließelement (18, 20, 35), das im Verhältnis zum Gehäuse (11, 12) des Ventils (10) bewegbar ist,
- wobei das Ventil (10) eine im Wesentlichen längsgerichtete Ausdehnung entlang einer vorherrschenden Strömungsrichtung von Fluid durch das Ventil (10) aufweist,
- wobei das stationäre Element (16, 30, 31) von einem Innenumfang des Gehäuses (11, 12) getragen wird und sich im Verhältnis zum Innenumfang des Gehäuses (11, 12) in einer feststehenden Position befindet,
- wobei das Ventil (10) ein mittiges Element (21, 38) mit einer oder mehreren Öffnungen (24, 39) umfasst, um einen Fluidstrom durch das Ventil (10) und durch das mittige Element (21, 38) zu gestatten, wenn das Schließelement (18, 20, 35) sich nicht in einer vollständig geschlossenen Stellung befindet, wobei das mittige Element (21, 38) vom stationären Element (16, 30, 31) getragen wird und sich im Verhältnis zum stationären Element (16, 30, 31) in einer feststehenden Position befindet,
- wobei das Schließelement (18, 20, 35) entlang oder in Verlängerung des mittigen Elements (21, 38) angeordnet ist und das Schließelement (18, 20, 35) mindestens teilweise an einer Seitenwand des mittigen Elements (21, 38) entlang verläuft oder anstößt, wenn es sich in einer ersten Stellung befindet, in welcher das Schließelement (18, 20) die eine oder die mehreren Öffnungen (24, 39) verschließt,
- wobei das Schließelement (18, 20, 35) entlang der Längsausdehnung des Ventils (10) und im Verhältnis zum mittigen Element (21, 38) bewegbar ist zwischen der ersten Position, in welcher das Schließelement (18, 20) die eine oder die mehreren Öffnungen (24, 39) verschließt und dadurch kein Strömen von Fluid durch die eine oder die mehreren Öffnungen (24, 39) gestattet, und einer zweiten Position, in welcher die eine oder die mehreren Öffnungen (24, 39) offen sind und somit ein Strömen von Fluid durch die eine oder die mehreren Öffnungen (24, 39) gestatten, wobei das
mittige Element ein parallel zur Längsausdehnung des Ventils angeordnetes mittiges Rohr (21) ist, das Schließelement (18, 20) entlang des mittigen Rohres (21) angeordnet ist und das Schließelement (18, 20) zumindest teilweise entlang einer Seitenwand des mittigen Rohres (21) verläuft, wenn es sich in der ersten Position befindet, **dadurch gekennzeichnet, dass** ein Schieber (18) des Schließelements (18, 20) entlang einer Außenfläche der Seitenwand des mittigen Rohres (21) verläuft, wobei das mittige Rohr (21) becherförmig ist und eine Basis (26) aufweist, der Schieber (18) becherförmig ist und eine Basis aufweist, ein Innenumfang des becherförmigen Schiebers (18) an einem Außenumfang des mittigen Rohres (21) entlang gleitet und zwischen der Basis (26) des mittigen Rohres (21) und der Basis des becherförmigen Schiebers (18) eine Endkappe (27) vorgesehen ist, wobei die Endkappe (27) an der Basis (26) des mittigen Rohres (21) befestigt ist und mit einer Aussparung zum Haltern einer Dichtung (28) an der Endkappe (27) versehen ist.

2. Ventil nach Anspruch 1, wobei der Stellantrieb (15) einen Schrittmotor (16) umfasst und wobei der Schrittmotor (16) einen Teil des stationären Elements (16, 30, 31) darstellt, und wobei eine Spindel (19) des Schrittmotors (16) entlang einer Drehrichtung im Verhältnis zum stationären Teil (16, 30, 31) beweglich ist, wobei die Spindel in der Lage ist, das Schließelement zwischen der ersten Position und der zweiten Position hin und her zu bewegen.

3. Ventil nach Anspruch 2, wobei der Schrittmotor (16) eine Kapselung eines Stators und eines Rotors des Schrittmotors umfasst und wobei die Kapselung des Stators und Rotors von einem Rahmen (30) des stationären Elements getragen wird und sich im Verhältnis zu diesem in einer feststehenden Position befindet, wobei die Kapselung einen hermetischen Abschluss des Stators und Rotors gegen das durch das Ventil strömende Fluid bereitstellt.

4. Ventil nach einem der Ansprüche 1 bis 3, wobei das mittige Element (21) zumindest teilweise von einem Rahmen (30) des stationären Elements getragen wird und sich im Verhältnis zum Rahmen (30) des stationären Elements in einer feststehenden Position befindet.

5. Ventil nach einem der Ansprüche 1 bis 3, wobei ein Schieber (18) des Schließelements entlang einer Seitenwand des mittigen Rohres (21) positioniert ist und wobei der Schieber (18) des Schließelements durch das mittige Rohr (21) beweglich geführt wird und wobei der Schieber (18) des Schließelements zumindest teilweise vom mittigen Rohr (21) getragen wird.

6. Ventil nach Anspruch 2 und Anspruch 5, wobei eine Längsausdehnung des Schiebers (18) des Schließelements sich entlang der Längsausdehnung des mittigen Rohres (21) erstreckt und wobei sich nur ein Teil der Längsausdehnung des Schiebers (18) des Schließelements entlang einer Seitenwand des mittigen Rohres (21) erstreckt, während das Schließelement zwischen der ersten Position und der zweiten Position, und umgekehrt, verfährt, und wobei ein anderer Teil des Schiebers (18) des Schließelements von der Spindel (19) des Motors (16) getragen wird.

7. Ventil nach Anspruch 6, wobei ein erstes Ende des becherförmigen Schiebers (18) in der ersten Position des Schließelements die eine oder die mehreren Öffnungen schließt, wodurch kein Fluidstrom durch die Öffnungen gestattet ist, und in der zweiten Position des Schließelements die eine oder die mehreren Öffnungen zumindest teilweise öffnet, so dass ein Fluidstrom durch die Öffnungen gestattet ist, und wobei in sowohl der ersten als auch der zweiten Position des Schließelements ein zweites Ende des Schiebers (18) von der Spindel (19) des Motors (16) getragen wird.

8. Ventil nach einem der Ansprüche 1 bis 7, wobei der stationäre Teil umfasst: einen Rahmen (30), wobei der Rahmen (30) einen Verbindungsteil (30A) zum Anschluss an einen Anschlussflansch (23) des Gehäuses (11, 12) aufweist, einen Zwischenteil (30B), der entlang der Öffnungen (24) des mittigen Rohres (21) verläuft, einen trichterförmigen Teil (30C), der an einer Spindel (19) des Stellantriebs (15) verläuft, und einen flachen Teil (30D) zum Stützen eines Motors (16) des Stellantriebs (15).

9. Ventil nach einem der Ansprüche 1 bis 8, wobei das Gehäuse durch zumindest einen ersten Gehäuseteil (11) und einen zweiten Gehäuseteil (12) gebildet ist, wobei der erste Gehäuseteil (11) mit einem ersten Anschlussflansch (23) versehen ist, wobei der erste Anschlussflansch (23) für ein Anschlussrohr (13) für das Ventil gedacht ist, und der erste Anschlussflansch (23) zumindest teilweise ein Ende des mittigen Rohres (21) trägt, und wobei zumindest das mittige Rohr (21) und der Stellantrieb (15) beide nur vom ersten Gehäuseteil (11) getragen werden, und wobei der zweite Gehäuseteil (12) mit einem zweiten Anschlussflansch versehen ist, der für ein Anschlussrohr (14) für das Ventil gedacht ist,
wobei der zweite Gehäuseteil (12) das mittige Rohr (21) und den Stellantrieb (15) nicht trägt.

10. Ventil nach einem der Ansprüche 1 bis 9, wobei ein Anschluss (29), der eine Verdrahtung für den Stellantrieb bereitstellt, in einer Seitenwand des Gehäuses an einer Position entlang eines Umfangs des Gehäuses vorgesehen ist, die einer Position eines Gegenanschlusses (32) des Stellantriebs entspricht.

11. Ventil nach einem der Ansprüche 1 bis 10, wobei eine Abschirmplatte angrenzend zum Motor des Stellantriebs montiert ist, wobei die Abschirmplatte den Motor gegen durch das Ventil strömendes Fluid abschirmt.

12. Verfahren zum Zusammenbauen eines Ventils nach einem der Ansprüche 1 bis 11, wobei das Verfahren die folgenden Schritte umfasst:
- Bereitstellen eines Rahmens (30), der zumindest einen Verbindungsteil (30A) und einen flachen Teil (30D) aufweist, die entlang einer Längsausdehnung des Rahmens gegenseitig versetzt sind,
- Bereitstellen eines mittigen Elements (21, 38), wobei ein Teil des mittigen Elements mit dem Verbindungsteil (30A) des Rahmens (30) verbunden wird,
- Bereitstellen eines Stellantriebs (15), der einen Motor (16), eine Spindel (19) und einen Schieber (18) umfasst, wobei der Stellantrieb (15) vormontiert ist,
- Montieren des Stellantriebs (15) mit dem Schieber (18, 35) entlang oder in Verlängerung einer Seitenwand des mittigen Elements (21, 38),
- Verbinden des Motors (16) des Stellantriebs mit einem flachen Teil (30D) des Rahmens, nachdem der Schieber (18, 35) entlang oder in Verlängerung des mittigen Elements (21, 38) montiert wurde,
- Montieren des Rahmens (30) zusammen mit dem Stellantrieb (15) an einem Innenumfang eines ersten Gehäuseteils (11) des Ventils,
- Montieren des Teils des mittigen Elements (21, 38) an einem Anschlussflansch (23) des ersten Gehäuseteils (11) des Ventils, und
- Montieren eines zweiten Gehäuseteils (12) des Ventils am ersten Gehäuseteil (11) des Ventils und dadurch Einhausen des Stellantriebs (15) und des mittigen Rohrs (21) im Gehäuse des Ventils, **dadurch gekennzeichnet, dass** der Schritt des Montierens des Stellantriebs (15) das Aufschieben des Schiebers (18) auf eine Außenfläche der Seitenwand des mittigen Rohres (21) umfasst, wobei ein becherförmiges mittiges Rohr (21) verwendet wird, das eine Basis (26) aufweist, und ein becherförmiger Schieber (18) verwendet wird, der eine Basis aufweist, und ein Innenumfang des becherförmigen Schiebers (18) an einem Außenumfang des mittigen Rohres (21) entlang gleitet, und eine Endkappe (27) zwischen der Basis (26) des becherförmigen Schiebers (18) vorgesehen ist, wobei die Endkappe (27) an der Basis (26) des mittigen Rohres (21) befestigt ist und mit einer Aussparung zum Haltern einer Dichtung (28) an der Endkappe (27) versehen ist.

13. Dampfkompressionssystem, vorzugsweise eine Kälteanlage, mit mindestens einem Ventil entlang der Verrohrung des Dampfkompressionszyklussystems, wobei mindestens ein Ventil des Dampfkompressionssystems ein Ventil nach einem der Ansprüche 1 bis 11 ist.

## Revendications

1. Soupape (10) comprenant un corps (11, 12) et un actionneur (15), l'actionneur comprenant un élément (16, 30, 31) fixe par rapport au corps (11, 12) de la soupape (10) et un élément de fermeture (18, 20, 35) situé à l'intérieur du corps (11, 12) et mobile par rapport au corps (11, 12) de la soupape (10),
- la soupape (10) ayant une extension sensiblement longitudinale le long d'un sens d'écoulement prévalant de fluide dans la soupape (10),
- l'élément fixe (16, 30, 31) étant supporté par une circonférence intérieure du corps (11, 12) et étant dans une position fixe par rapport à la circonférence intérieure du corps (11, 12),
- la soupape (10) comprenant un élément central (21, 38) comportant un ou plusieurs orifices (24, 39) pour permettre l'écoulement du fluide dans la soupape (10) et dans l'élément central (21, 38), quand l'élément de fermeture (18, 20, 35) n'est pas dans une position de fermeture complète, ledit élément central (21, 38) étant supporté par l'élément fixe (16, 30, 31) et étant dans une position fixe par rapport à l'élément fixe (16, 30, 31),
- l'élément de fermeture (18, 20, 35) étant placé le long de l'élément central (21, 38) ou en extension par rapport à celui-ci, et ledit élément de fermeture (18, 20, 35) s'étendant au moins en partie le long d'une paroi latérale de l'élément central (21, 38) ou en butée contre celle-ci, quand ledit élément de fermeture est dans une première position, dans laquelle l'élément de fermeture (18, 20) ferme le ou les orifices (24, 39),
- l'élément de fermeture (18, 20, 35) étant mobile le long de l'extension longitudinale de la soupape (10) et, par rapport à l'élément central (21, 38), entre la première position, dans laquelle l'élément de fermeture (18, 20) ferme le ou les orifices (24, 39), de manière à empêcher le fluide de passer par le ou les orifices (24, 39), et une seconde position, dans laquelle le ou les orifices (24, 39) sont ouverts, de manière à permettre au fluide de passer par le ou les orifices (24, 39),
l'élément central étant un tube central (21) placé en parallèle par rapport à l'extension longitudinale de la soupape, l'élément de fermeture (18, 20) étant situé le long du tube central (21), et l'élément de fermeture (18, 20) s'étendant au moins en partie le long d'une paroi latérale du tube central (21), quand ledit élément de fermeture est dans la première position, la soupape étant **caractérisée en ce qu'**un coulisseau (18) de l'élément de fermeture (18, 20) s'étend le long d'une surface extérieure de la paroi latérale du tube central (21), le tube central (21) ayant une forme de coupelle comportant une base (26), le coulisseau (18) ayant une forme de coupelle comportant une base, une circonférence intérieure du coulisseau en forme de coupelle (18) coulissant le long d'une circonférence extérieure du tube central (21), et un embout (27) étant situé entre la base (26) du tube central (21) et la base du coulisseau en forme de coupelle (18), l'embout (27) étant fixé à la base (26) du tube central (21) et étant muni d'un évidement permettant de recevoir un joint (28) pour l'embout (27).

2. Soupape selon la revendication 1, dans laquelle l'actionneur (15) comprend un moteur pas-à-pas (16), et dans laquelle le moteur pas-à-pas (16) fait partie de l'élément fixe (16, 30, 31), et dans laquelle une broche (19) du moteur pas-à-pas (16) est mobile le long d'un sens de rotation par rapport à la partie fixe (16, 30, 31), ladite broche étant capable de déplacer l'élément de fermeture entre la première position et la seconde position.

3. Soupape selon la revendication 2, dans laquelle le moteur pas-à-pas (16) comprend une encapsulation d'un stator et d'un rotor du moteur pas-à-pas, et dans laquelle l'encapsulation du stator et du rotor est supportée par un cadre (30) de l'élément fixe et est dans une position fixe par rapport audit cadre, ladite encapsulation procurant une enceinte hermétique au stator et au rotor par rapport au fluide traversant la soupape.

4. Soupape selon l'une quelconque des revendications 1 à 3, dans laquelle l'élément central (21) est au moins en partie supporté par un cadre (30) de l'élément fixe et est dans une position fixe par rapport au cadre (30) de l'élément fixe.

5. Soupape selon l'une quelconque des revendications 1 à 3, dans laquelle un coulisseau (18) de l'élément de fermeture est positionné le long d'une paroi latérale du tube central (21), et dans laquelle le coulisseau (18) de l'élément de fermeture est guidé mobile par le tube central (21), et dans laquelle le coulisseau (18) de l'élément de fermeture est au moins en partie supporté par le tube central (21).

6. Soupape selon les revendications 2 et 5, dans laquelle une extension longitudinale du coulisseau (18) de l'élément de fermeture s'étend le long de l'extension longitudinale du tube central (21), et dans laquelle seule une partie de l'extension longitudinale du coulisseau (18) de l'élément de fermeture s'étend le long d'une paroi latérale du tube central (21) pendant le déplacement de l'élément de fermeture entre la première position et la seconde position, et inversement, et dans laquelle une autre partie du coulisseau (18) de l'élément de fermeture est supportée par la broche (19) du moteur (16).

7. Soupape selon la revendication 6, dans laquelle une première extrémité du coulisseau en forme de coupelle (18), dans la première position de l'élément de fermeture, ferme le ou les orifices, de manière à empêcher le fluide de passer par les orifices, et dans la seconde position de l'élément de fermeture, ouvre au moins en partie le ou les orifices, de manière à permettre au fluide de passer par les orifices, et dans laquelle une seconde extrémité du coulisseau (18), tant dans la première position que dans la seconde position de l'élément de fermeture, est supportée par la broche (19) du moteur (16).

8. Soupape selon l'une quelconque des revendications 1 à 7, dans laquelle la partie fixe comprend un cadre (30), ledit cadre (30) ayant une partie de raccordement (30A) pour le raccordement à une bride de raccordement (23) du corps (11, 12), une partie intermédiaire (30B) passant le long des orifices (24) du tube central (21), une partie en forme d'entonnoir (30C) passant le long d'une broche (19) de l'actionneur (15), et une partie plane (30D) pour supporter un moteur (16) de l'actionneur (15).

9. Soupape selon l'une quelconque des revendications 1 à 8, dans laquelle le corps est constitué, au moins, d'une première partie de corps (11) et d'une seconde partie de corps (12), la première partie de corps (11) étant munie d'une première bride de raccordement (23), ladite première bride de raccordement (23) étant destinée à un tuyau de raccordement (13) pour la soupape, et ladite première bride de raccordement (23) supportant au moins en partie une extrémité du tube central (21), au moins le tube central (21) et l'actionneur (15) étant l'un et l'autre supportés uniquement par la première partie de corps (11), et la seconde partie de corps (12) étant munie d'une seconde bride de raccordement destinée à un tuyau de raccordement (14) pour la soupape, ladite seconde partie de corps (12) ne supportant ni le tube central (21) ni l'actionneur (15).

10. Soupape selon l'une quelconque des revendications 1 à 9, dans laquelle une connexion (29) apportant le câblage de l'actionneur est positionnée dans une paroi latérale du corps dans une position le long d'une circonférence du corps correspondant à une position d'une connexion d'accouplement (32) de l'actionneur.

11. Soupape selon l'une quelconque des revendications 1 à 10, dans laquelle une plaque de blindage est montée à proximité d'un moteur de l'actionneur, la plaque de blindage blindant le moteur contre un fluide s'écoulant dans la soupape.

12. Procédé d'assemblage d'une soupape selon l'une quelconque des revendications 1 à 11, ledit procédé comprenant les étapes consistant à :
- fournir un cadre (30) comportant au moins une partie de raccordement (30A) et une partie plane (30D) étant mutuellement déplacées le long d'une extension longitudinale du cadre ;
- fournir un élément central (21, 38) avec une partie de l'élément central jointe à la partie de raccordement (30A) du cadre (30) ;
- fournir un actionneur (15) comprenant un moteur (16), une broche (19) et un coulisseau (18), ledit actionneur (15) étant pré-assemblé ;
- monter l'actionneur (15) avec le coulisseau (18, 35) le long d'une paroi latérale de l'élément central (21, 38) ou en extension par rapport à celle-ci ;
- joindre le moteur (16) de l'actionneur à une partie plane (30D) du cadre une fois le coulisseau (18, 35) monté le long de l'élément central (21, 38) ou en extension par rapport à celui-ci ;
- monter le cadre (30) conjointement avec l'actionneur (15) sur une circonférence intérieure d'une première partie de corps (11) de la soupape ;
- monter la partie de l'élément central (21, 38) sur une bride de raccordement (23) de la première partie de corps (11) de la soupape ; et
- monter une seconde partie de corps (12) de la soupape sur la première partie de corps (11) de la soupape, de manière à enfermer l'actionneur (15) et le tube central (21) dans le corps de la soupape, le procédé étant **caractérisé en ce que** l'étape de montage de l'actionneur (15) consiste à faire coulisser le coulisseau (18) sur une surface extérieure de la paroi latérale du tube central (21), un tube central en forme de coupelle (21) comportant une base (26) et un coulisseau en forme de coupelle (18) comportant une base étant utilisés, et une circonférence intérieure du coulisseau en forme de coupelle (18) coulissant le long d'une circonférence extérieure du tube central (21), et un embout (27) étant situé entre la base (26) du coulisseau en forme de coupelle (18), l'embout (27) étant fixé à la base (26) du tube central (21) et étant muni d'un évidement permettant de recevoir un joint (28) pour l'embout (27).

13. Système de compression de vapeur, de préférence système frigorifique, comprenant au moins une soupape le long d'une tuyauterie du système de cycle de compression de vapeur, ladite au moins une soupape du système de compression de vapeur étant une soupape selon l'une quelconque des revendications 1 à 11.
